# EUROPEAN PATENT SPECIFICATION

(11) **EP 2 127 961 B1**
(45) Date of publication and mention of the grant of the patent: **20.04.2011**
(21) Application number: 07832478.7
(22) Date of filing: 26.11.2007
(51) Int. Cl.: B60R 21/34, B60R 21/16

(54) **AIRBAG AND AIRBAG DEVICE**
AIRBAG UND AIRBAGVORRICHTUNG
COUSSIN DE SECURITE GONFLABLE ET DISPOSITIF DE COUSSIN DE SECURITE GONFLABLE

(30) Priority: 16.03.2007 JP 2007068897
(43) Date of publication of application: 02.12.2009
(73) Proprietor: Takata Corporation, Tokyo 106-8510 (JP)
(72) Inventor: KOBAYASHI, Yoshihiro, Tokyo 106-8510 (JP)
(74) Representative: Vossius & Partner
(86) International application number: PCT/JP2007/072753
(87) International publication number: WO 2008/114476

(56) References cited:
- WO-A1-99/46149
- JP-A- 2002 046 561
- JP-A- 2006 062 590
- JP-A- 2006 256 447
- US-A- 5 316 337
- US-A1- 2002 195 808

## Description

### Field of the Invention

The present invention relates to an apparatus configured to prevent a pedestrian, or an occupant of a bicycle or a motorbike (hereinafter, referred to as a pedestrian or the like) from hitting directly a portion of a vehicle body having a high stiffness such as a pillar portion when a motor vehicle collides with the pedestrian, the bicycle, or the motorbike during the travel and protect the pedestrian or the like and an airbag therefore.

### Background of the Invention

When a motor vehicle collides with a pedestrian, a bicycle, or a motorbike during the travel, the collided pedestrian or the like might be swept at the lower part of the body by a front portion of a vehicle body of the motor vehicle and be thrown onto a hood which covers an upper surface of the front portion of the vehicle body, thereby colliding secondarily with a portion having a high stiffness such as a pillar portion.

In Japanese Unexamined Patent Application Publication No. 2006-256447, an airbag apparatus for a pedestrian configured to inflate airbags along a cowl top and left and right A-pillars of the motor vehicle when the motor vehicle collides with a pedestrian or the like to prevent the pedestrian or the like from hitting directly near the cowl top and the A-pillars and protect the pedestrian or the like is disclosed.

The airbag in the same publication includes a laterally inflated portion which covers the cowl and a vertically inflated portion which covers the A-pillar. In the same publication, there is a description about a procedure of folding an airbag such that the vertically inflated portion is firstly rolled by a plurality of times along folding lines extending in the direction of the width of the vehicle body, and then is pleated or rolled along folding lines in the fore-and-aft direction of the vehicle body toward a center side of the vehicle body.
[Patent Document 11 Japanese Unexamined Patent Application Publication No. 2006-256447

As described in Paragraph 0026 in the above-described Document 1, a foundation cloth (panel) of the airbag is formed of woven fabric of polyester yarn or polyamide yarn or the like. The airbag for a pedestrian in the related art is manufactured into a bag shape by placing two panels one on top of another and stitching peripheral edge portions of the panels by a stitching yarn of polyester or the like as described in Paragraph 0042 in the above-described Document 1. An air bag formed from a single foundation cloth wherein the first and second panel are stitched along a peripheral edge portion other than a folded-back side where the panels are connected is known from document JP 2002-46561 A.

In the case of the air bag in which the entire circumference is stitched, the overlapped thickness of a portion where seams are overlapped is increased and a restoring force (spring back) is also increased.

In other words, when manufacturing the airbag by stitching the panels formed of woven fabric of polyester yarn or polyamide yarn or the like, a sealing material is applied on the panels for restraining gas leak from the stitched seam. However, application of the sealing material increases the overlapped thickness of a folded member by a thickness corresponding to the thickness of the sealing material itself when the sealing material is applied. When the sealing material is applied, the panels are provided with resiliency and hence can hardly be folded back, which also increases the overlapped thickness of the folded member. In addition, the strength of spring back of the folded member is also increased by an extent corresponding to the resiliency of the panels.

### Summary of the Invention

It is an object of the present invention to solve the problems in the related art as described above and provide an airbag for a pedestrian or the like which may be reduced in overlapped thickness of a folded member and may be reduced in volume of the folded member (package volume) and an airbag apparatus using the airbag.

An airbag as defined by claim 1 for protecting a pedestrian or the like is deployed along an outer surface of a vehicle body by gas from an inflator including: a first panel facing the vehicle body; and a second panel overlapped with the first panel and arranged on the opposite side from the vehicle body with the intermediary of the first panel, whereby the first panel and the second panel are cut out from a single foundation cloth in a state in which both of them are connected at a part and are folded back along the part and overlapped, and stitched along a peripheral edge portion other than a folded-back side.

According to an aspect a sealing material for sealing a seam exists along the stitched peripheral edge portion other than the folded-back side between the first panel and the second panel.

The airbag includes a laterally inflated portion extending in the direction of the width of the vehicle body for covering at least part of a cowl portion and a vertically inflated portion continued from a lateral side of the laterally inflated portion with respect to the vehicle body and a rear side thereof with respect to the vehicle body for covering part of an A-pillar, and the folded-back side is a side including the lateral side of the vertically inflated portion with respect to the vehicle body.

An airbag apparatus includes a folded member of the airbag according to Claim 1, a case in which the folded member of the airbag is stored, and the inflator for inflating the airbag.

The folded member of the airbag is formed by pleating or rolling the vertically inflated portion by a plurality of times along folding lines extending in the direction of the width of the vehicle body to obtain a folded member of the vertically inflated portion, placing the folded member of the vertically inflated portion on top of the lateral side of the laterally inflated portion with respect to the vehicle body, and then folding back the folded member of the vertically inflated portion and the lateral side of the lateral inflated portion with respect to the vehicle body so as to overlap the same on a center side of the laterally inflated portion with respect to the vehicle body.

The airbag in the present invention is formed by cutting out the first panel and the second panel from the single foundation cloth in a state of being connected at the part, folding back along the part and overlapping one on top of another, and stitching the peripheral edge portion other than the folded-back side. Since the portion of the folded-back side is not stitched, even when it is folded along the folding lines in the direction intersecting the folded-back side, the overlapped thickness of the portion of the folded-back side is small. Therefore, the package volume of the folded member of the airbag is small.

In particular, even when the sealing material for sealing the seam exists between the first panel and the second panel, the package volume of the folded member may be reduced by reducing the overlapped thickness at the portion of the folded-back side and weakening the spring back thereof.

It is also possible to provide a portion in which the sealing member does not exist at the stitched portion between the first panel and the second panel so that the both panels come into direct contact with each other at the portion. In this configuration, since gas leaks from the seam at the portion where the sealing member does not exist after the inflation, the in-bag pressure properties may be adjusted.

The airbag in the present invention includes the laterally inflated portion and the vertically inflated portion, and the first panel and the second panel are continued at the side of the vertically inflated portion on the lateral side with respect to the vehicle body. When the vertically inflated portion is pleated or rolled by a plurality of times along the folding lines in the direction of the width of the vehicle body, the overlapped thickness of the folded member of the vertically inflated portion on the lateral side with respect to the vehicle body is small.

Therefore, the folded member of the airbag formed by folding back the folded member of the vertically inflated portion further toward the center side with respect to the vehicle body is also small in overlapped thickness and small in package volume.

### Brief Description of Drawings

[Fig. 1] Fig. 1 is a plan view showing the manufacturing of the airbag.
[Fig. 2] Fig. 2 is a plan view showing the procedure of manufacturing the airbag.
[Fig. 3] Fig. 3 is a plan view showing the procedure of manufacturing the airbag.
[Fig. 4] Fig. 4 is a plan view showing the folding of the airbag.
[Fig. 5] Fig. 5 is a plan view showing the folding of the airbag.
[Fig. 6] Fig. 6 is a cross-sectional view taken along the line VI-VI in Fig. 5.
[Fig. 7] Fig. 7 is a plan view showing the airbag.
[Fig. 8] Fig. 8 is a cross-sectional view taken along the line VIII-VIII in Fig. 7.
[Fig. 9] Fig. 9 is a perspective view of an airbag apparatus.
[Fig. 10) Fig. 10 is a perspective view of a motor vehicle having the airbag apparatus.
[Fig. 11] Fig. 11 is a perspective view of the motor vehicle in Fig. 10 in a state in which the airbags are inflated.

### Detailed Description

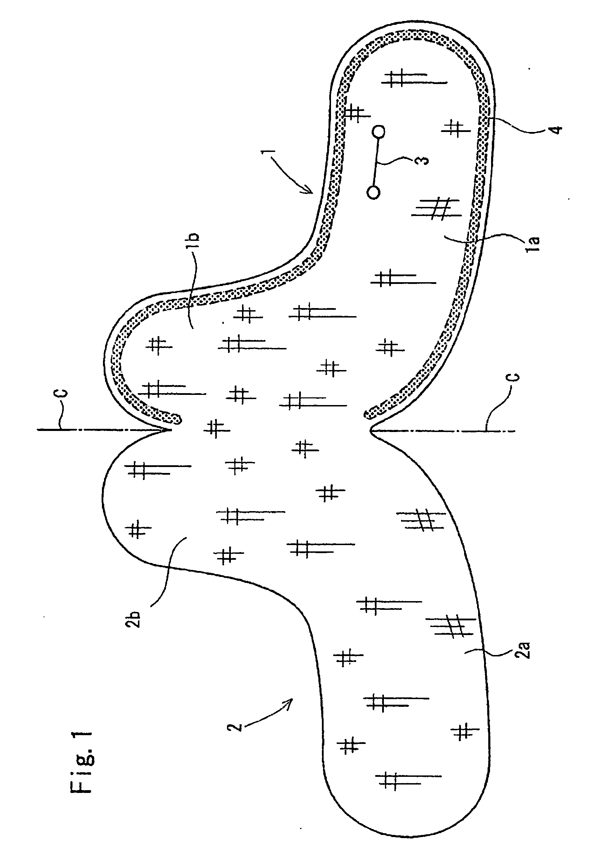

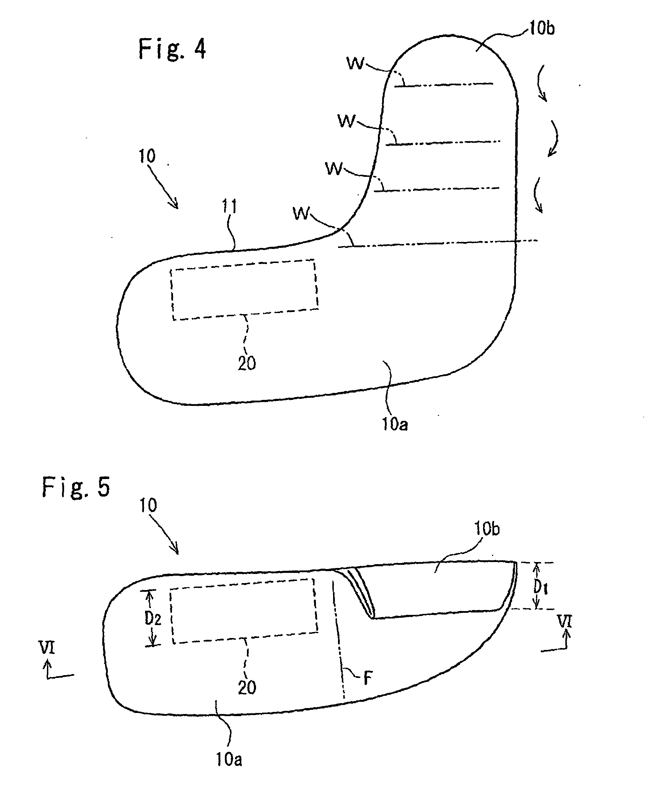

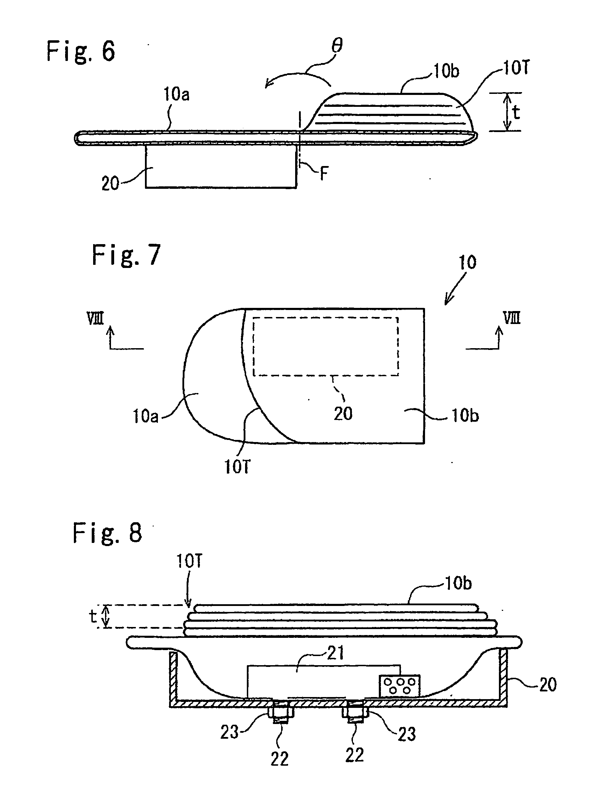

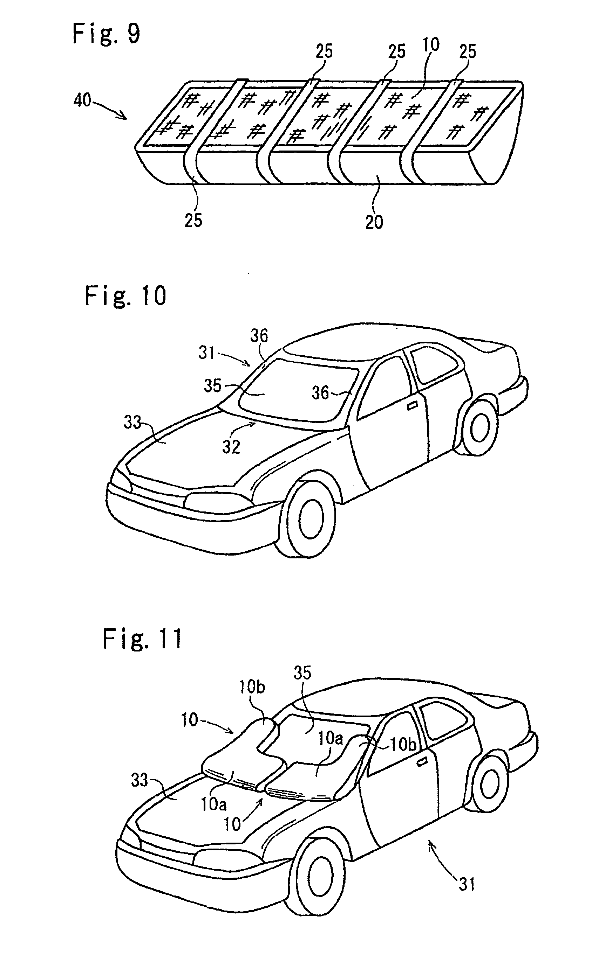

Referring now to the drawings, an embodiment will be described. Fig. 1 to Fig. 3 are plan views showing a procedure of manufacturing an airbag according to the embodiment, Fig. 4 to Fig. 9 are explanatory drawings showing a procedure of folding the airbag, Fig. 10 is a perspective view of a motor vehicle having an airbag apparatus for protecting a pedestrian or the like according to the embodiment, and Fig. 11 is a perspective view of the motor vehicle when the airbag is inflated. Fig. 6 is a cross-sectional view taken along the line VI-VI in Fig. 5, and Fig. 8 is a cross-sectional view taken along the line VIII-VIII in Fig. 7.

As shown in Fig. 10, a motor vehicle 31 is a four-door sedan. However, the present invention is not limited to vehicles of a specific mode. An airbag apparatus 40 (see Fig. 9) configured to open to allow an airbag 10 to be inflated upon collision with a pedestrian or the like is installed in a rear portion of a bonnet hood 33 or in a cowl top 32.

The airbag apparatus 40 includes the airbag 10, a case 20 in which a folded member of the airbag 10 is stored, and an inflator 21 for inflating the airbag 10 as shown in Figs. 8 and 9.

The airbags 10 each include a laterally inflated portion l0a which is inflated so as to cover a portion near the cowl top 32, and a vertically inflated portion 10b which is continued on a lateral side and a rear side of the laterally inflated portion 10a with respect to the vehicle body and is inflated so as to cover an A-pillar 36 as shown in Fig. 11.

Referring now to Fig. 1 to Fig. 3, a procedure of manufacturing the airbag 10 will be described.

A woven fabric of synthetic fiber such as polyester fiber or aramid fiber is cut out into a shape as shown in Fig. 1. This woven fabric is coated with resin such as silicon resin.

As shown in Fig. 1, the cut-out woven fabric includes a first panel 1 and a second panel 2 continuing to the first panel 1. The panels 1, 2 each have a substantially L-shape, and respectively include lower portions 1a, 2a which constitute the laterally inflated portion 10a and upper portions 1b 2b which constitute the vertically inflated portion 10b. The first panel 1 is formed with a slit (inflator insertion port 3) for inserting the inflator 21 into the airbag 10. The first panel 1 and the second panel 2 have shapes of lateral symmetry, and a straight line C indicated by an alternate long and short dash line is an axis of symmetry.

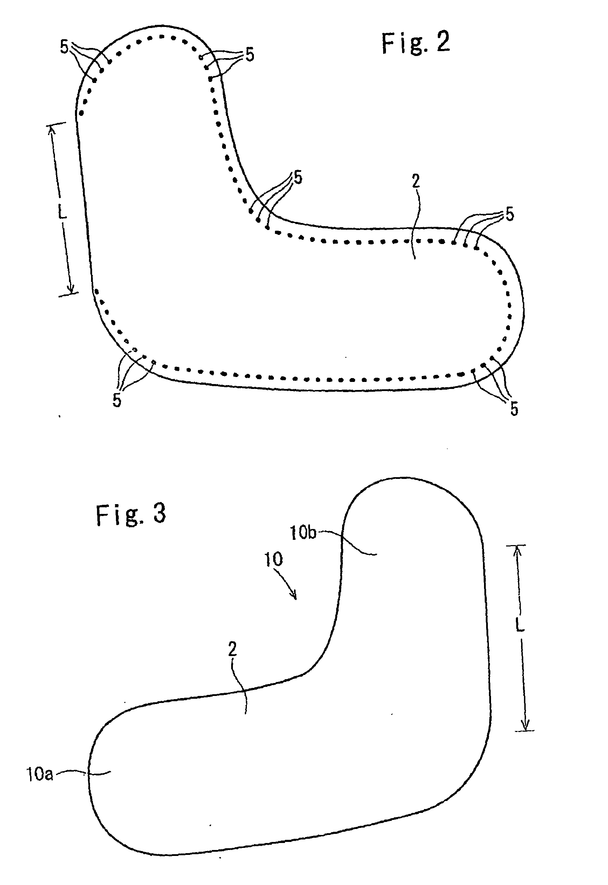

As shown in Figs. 2 and 3, since the second panel 2 is folded back along the straight line C so as to be placed on top of the first panel 1, a portion of the straight line C which extends across the panel corresponds to a folded-back side L. A sealing material 4 for preventing gas from leaking from a seam is applied to a peripheral edge portion of the panel 1 other than the folded-back side L. The sealing material 4 may be silicon-based adhesive agent or the like. The sealing material 4 is applied to the first panel 1 continuously along the peripheral edge portion into a band shape having a narrow width of about 5 to 20 mm.

Then, the panel is folded into two along the folded-back side L so as to place the second panel 2 on top of the first panel 1. Subsequently, the panels 1, 2 are stitched together with a yarn along the peripheral edge portion so as to penetrate through the portion where the sealing material 4 is applied. Reference numeral 5 designates a seam.

Then, by reversing it through the inflator insertion port 3, the airbag 10 as shown in Fig. 3 is obtained.

The airbag 10 and the inflator 21 are connected to the case 20 by inserting the inflator 21 into the airbag 10 through the inflator insertion port 3, inserting stud bolts 22 (Fig. 8) provided on the inflator 21 into respective volt insertion holes (no reference numerals designated) of the airbag 10 and a bottom surface of the case 20, and tightening nuts 23 into the bolts 22.

Then, the airbag 10 is spread flatly, and is folded and stored in the case 20.

Referring now to Fig. 4 to Fig. 9, a folding procedure will be described.

First of all, the vertically inflated portion 10b of the airbag 10 is pleated or rolled, preferably, pleated along folding lines w extending in the direction of the width of the vehicle body. One of the folding lines w is set substantially on an extension of an upper edge 11 of the laterally inflated portion 10a and, as shown in Figs. 5 and 6, a folded member of the vertically inflated portion 10b is finally overlapped on the lateral side of the laterally inflated portion 10a with respect to the vehicle body. A width D₁ of the folded member of the vertically inflated portion 10b in the fore-and-aft direction of the vehicle body is preferably about 85 to 100% of a width D₂ of the case 20 in the fore-and-aft direction of the vehicle body.

Therefore, subsequently, an area of the laterally inflated portion 10a on the lateral side with respect to the vehicle body and the folded member of the vertically inflated portion 10b are folded back along a folding line F extending in the fore-and-aft direction as indicated by an arrow θ in Fig. 6 toward a center side with respect to the vehicle body and, as shown in Figs. 7 and 8, are placed on top of an area of the laterally inflated portion 10a on the center side with respect to the vehicle body to achieve a sate shown in Figs. 7 and 8. Then, a portion of the laterally inflated portion 10a overlapped with the folded member of the vertically inflated portion 10b and the folded member of the vertically inflated portion 10b are pushed into the case 20. Then, a remaining portion of the airbag 10 extending around the pushed portion is pushed into the case 20.

Then, a band 25 is put around the airbag 10 and the case 20 to obtain the airbag apparatus 40. The band 25 has a strength which is broken when the airbag 10 is inflated.

When a collision of a pedestrian or the like with respect to the motor vehicle 31 having the airbag apparatus 40 including the airbags 10 mounted thereon is sensed by a sensor, the inflators 21 are activated, and the airbags 10 are inflated as shown in Fig. 11 so as to cover the cowl top 32 or the A-pillars 36, whereby the pedestrian or the like is prevented from directly hitting the cowl top 32 or the A-pillar 36.

The airbag 10 of the airbag apparatus 40 does not have the seam 5 and the sealing material 4 at the folded-back side L, and the thickness of a portion in the vicinity of the folded-back side L when the vertically inflated portion 10b is folded is small. Also, a restoring force (spring back) of the folded member in the vicinity of the folded-back side L is small. Accordingly, a package volume of the airbag 10 is reduced.

In particular, the folded-back side L is located on the far side from the folding line F when the vertically inflated portion 10b is folded back toward the center side with respect to the vehicle body along the folding line F as indicated by the arrow θ as shown in Fig. 6. Therefore, a thickness t of a distal end side 10T when the vertically inflated portion 10b is folded back toward the center side with respect to the vehicle body along the folding line F is small, and hence the spring back is weak. When the thickness t of the distal end side 10T and the strength of the spring back are small, the work to push the folded member of the vertically inflated portion 10b into the case 20 is easy. In other words, even though the operator releases his/her hand from the distal end side 10T of the folded member when pushing the folded member of the vertically inflated portion 10b into the case 20, the distal end side 10T is prevented from being thick, so that other portions of the folded member of the airbag may be pushed into the case 20 with ease. Granting that the thickness of the distal end side 10T is large and the strength of the spring back is also strong, even when the distal end side 10T is pushed into the case 20, if the operator releases his/her hand from the distal end side 10T, the distal end side 10T is protruded significantly from the case 20, and the work to push the folded member of the airbag into the case 20 becomes troublesome.

In this embodiment, since the thickness t of the distal end side 10T is small and the strength of the spring back is weak, the entire part of the folded member of the airbag is pushed into the case 20 with ease as described above.

In the present invention, it is also possible to apply the sealing material 4 so as to avoid the sealing material 4 from reaching the folded-back side L, that is, so that a terminal end of the sealing material 4 is slightly apart from the straight line C to be folded back as shown in Fig. 1 for example. In this configuration, since gas is leaked from a portion in the proximity of the folded-back side L where the sealing material 4 is not applied, in-bag pressure maintaining properties of the inflated airbag are adjusted.

The embodiment described above is an example of the present invention, and modes other than those shown in the drawings may be employed. For example, it is possible to omit the sealing material 4 to allow the gas to leak from the seam of the inflated and deployed airbag. Accordingly, the in-bag pressure maintaining properties of the inflated airbag may be adjusted. Also, in the present invention, two or more folding lines F in the fore-and-aft direction of the vehicle body may be provided.

## Claims

1. An air bag for protecting a pedestrian or the like which is adapted to be deployed along an outer surface of a vehicle body by gas from an inflator (21) comprising: a first panel (1) being adapted to face the vehicle body; and a second panel (2) overlapped with the first panel and adapted to be arranged on the opposite side from the vehicle body with the intermediary of the first panel, wherein
the first panel and the second panel are cut out from a single foundation cloth in a state in which both of them are connected at a part (C) and are folded back along the part and overlapped, and stitched along a peripheral edge portion other than a folded-back side (L),
**characterized in that** the air bag (40) includes a laterally inflatable portion (10a) adapted to extend in the direction of the width of the vehicle body for covering at least part of a cowl portion (32),
a vertically inflatable portion (10b) continued from a lateral side of the laterally inflatable portion with respect to the vehicle body and a rear side thereof with respect to the vehicle body for covering part of an A-pillar (36), wherein the vertically inflatable portion (10b) is pleated or rolled along a plurality of folding lines (w) extending parallel to an upper edge (11) of the laterally inflatable portion, and
the folded-back side (L) is a side including the lateral side of the vertically inflatable portion with respect to the vehicle body.

2. The airbag according to Claim 1, **characterized in that** the first panel and the second panel are reversed to make inside out after having been stitched.

3. The airbag according to Claim 1, wherein a sealing material (4) for sealing a seam exists along the stitched peripheral edge portion other than the folded-back side between the first panel and the second panel.

4. An airbag apparatus comprising: a folded member of the airbag (20) according to Claim 1, 2 or 3,
a case (20) in which the folded member of the airbag is stored; and
an inflator (21) for inflating the airbag.

5. The airbag apparatus according to Claim 4, **characterized in that** the airbag is the airbag according to Claim 1, 2 or 3, and
the folded member of the airbag is formed by pleating or rolling the vertically inflatable portion by a plurality of times along folding lines (W) extending in the direction of the width of the vehicle body to obtain a folded member of the vertically inflatable portion, placing the folded member of the vertically inflatable portion on top of the lateral side of the laterally inflatable portion with respect to the vehicle body, and then folding back the folded member of the vertically inflatable portion and the lateral side of the laterally inflatable portion with respect to the vehicle body so as to overlap the same on a center side of the laterally inflatable portion with respect to the vehicle body.

6. The airbag apparatus according to Claim 4, wherein the width (D1) of the folded member of the vertically inflatable portion in.the fore-and-aft direction with respect to the vehicle body is 85 to 100% of the width (D2) of the case in the fore-and-aft direction with respect to the vehicle body.

7. A vehicle comprising an airbag apparatus according to any one of claims 4 to 6.

## Patentansprüche

1. Airbag zum Schützen eines Fußgängers oder dergleichen, der entlang einer äußeren Oberfläche eines Fahrzeugaufbaus durch Gas von einem Gebläse (21) aufgeblasen werden kann, mit: einer ersten Stoffbahn (1), die dem Fahrzeugaufbau zugewandt sein kann, und einer zweiten Stoffbahn (2), die die erste Stoffbahn überlappt und an der gegenüberliegenden Seite des Fahrzeugaufbaus mit dem Zwischenstück der ersten Stoffbahn angeordnet sein kann, wobei
die erste Stoffbahn und die zweite Stoffbahn aus einem einzigen Grundstoff so ausgeschnitten werden, dass beide an einem Teil (C) verbunden sind und an diesem Teil umgefaltet und überlappt werden, und wobei entlang eines Umfangskantenabschnitts, jedoch nicht an einer umgefalteten Seite (L), genäht wird, **dadurch gekennzeichnet, dass** der Airbag (40) einen seitlich aufblasbaren Abschnitt (10a) aufweist, der sich entlang der Breitenrichtung des Fahrzeugaufbaus erstrecken kann, um mindestens einen Teil eines Motorhaubenabschnitts (32) zu bedecken, einen vertikal aufblasbaren Abschnitt (10b), der sich an eine seitliche Seite des bezüglich des Fahrzeugaufbaus seitlich aufblasbaren Abschnitts und an eine hintere Seite des bezüglich des Fahrzeugaufbaus seitlich aufblasbaren Abschnitts anschließt, um einen Teil einer A-Säule (36) zu bedecken, wobei der vertikal aufblasbare Abschnitt (10b) entlang einer Vielzahl von Faltlinien (w), die sich parallel zu einer oberen Kante (11) des lateral aufblasbaren Abschnitts erstrecken, gefaltet oder gerollt ist, und
die umgefaltete Seite (L) eine Seite ist, die die seitliche Seite des bezüglich des Fahrzeugaufbaus vertikal aufblasbaren Abschnitts einschließt.

2. Airbag nach Anspruch 1, **dadurch gekennzeichnet, dass** die erste Stoffbahn und die zweite Stoffbahn umgekehrt sind, damit nach dem Nähen die Innenseite nach außen gestülpt werden kann.

3. Airbag nach Anspruch 1, wobei ein Dichtmaterial (4) zum Abdichten einer Naht entlang dem genähten Umfangskantenabschnitt vorgesehen ist, jedoch nicht an der umgefalteten Seite zwischen der ersten Stoffbahn und der zweiten Stoffbahn.

4. Airbagvorrichtung mit:
einem gefalteten Element des Airbags (10) nach Anspruch 1, 2 oder 3,
einem Gehäuse (20), in dem das gefaltete Element des Airbags gelagert wird, und
einer Aufblaseinrichtung (21) zum Aufblasen des Airbags.

5. Airbagvorrichtung nach Anspruch 4,
**dadurch gekennzeichnet, dass** der Airbag der Airbag nach Anspruch 1, 2 oder 3 ist und
dass das gefaltete Element des Airbags durch mehrmaliges Falten oder Rollen des vertikal aufblasbaren Abschnitts entlang Faltlinien (w), die sich in Breitenrichtung des Fahrzeugaufbaus erstrecken, gebildet wird, um ein gefaltetes Element des vertikal aufblasbaren Abschnitts zu erhalten, dass das gefaltete Element des vertikal aufblasbaren Abschnitts auf die seitliche Seite des bezüglich des Fahrzeugaufbaus seitlich aufblasbaren Abschnitts platziert wird, und dass dann das gefaltete Element des vertikal aufblasbaren Abschnitts und die seitliche Seite des bezüglich des Fahrzeugaufbaus seitlich aufblasbaren Abschnitts umgefaltet werden, um diesen an einer bezüglich des Fahrzeugaufbaus mittleren Seite des seitlich aufblasbaren Abschnitts zu überlappen.

6. Airbagvorrichtung nach Anspruch 4, wobei die Breite (D1) des gefalteten Elements des vertikal aufblasbaren Abschnitts in der Richtung von vorne nach hinten bezüglich des Fahrzeugaufbaus 85 bis 100% der Breite (D2) des Gehäuses in der Richtung von vorne nach hinten bezüglich des Fahrzeugaufbaus beträgt.

7. Fahrzeug mit einer Airbagvorrichtung nach einem der Ansprüche 4 bis 6.

## Revendications

1. Coussin de sécurité gonflable destiné à protéger un piéton ou autre, lequel est prévu pour être gonflé sur une surface extérieure d'une caisse de véhicule par le gaz d'un générateur (21), comprenant : un premier panneau (1) prévu pour être opposé à la caisse de véhicule ; et un deuxième panneau (2) recouvert par le premier panneau et prévu pour être disposé sur le côté opposé par rapport à la caisse de véhicule, le premier panneau étant intercalé, le premier panneau et le deuxième panneau étant découpés dans une seule toile de base dans un état où les deux sont reliés sur une ligne (C), sont rabattus le long de la ligne, l'un recouvrant l'autre, et cousus le long d'une partie de bordure périphérique à l'exception d'un côté de rabattement
**caractérisé en ce que** le coussin gonflable (40) comprend une section gonflable latérale (10a) prévue pour s'étendre dans le sens de la largeur de la caisse de véhicule pour recouvrir au moins partiellement une section de capot (32), une section gonflable verticale (10b) adjacente à une partie de côté de la section gonflable latérale par rapport à la caisse de véhicule et à une partie arrière de celle-ci par rapport à la caisse de véhicule, pour recouvrir partiellement une section d'un montant avant (36),
la section gonflable verticale (10b) étant pliée ou enroulée sur une pluralité de lignes de pliage (w) s'étendant parallèlement à un bord supérieur (11) de la section gonflable latérale, et
le côté de rabattement (L) étant un côté comprenant la partie latérale de la section gonflable verticale par rapport à la caisse de véhicule.

2. Coussin de sécurité gonflable selon la revendication 1, **caractérisé en ce que** le premier panneau et le deuxième panneau sont retournés après avoir été cousus, l'intérieur devenant l'extérieur.

3. Coussin de sécurité gonflable selon la revendication 1, où un matériau d'étanchéité (4) pour l'étanchéité d'une couture est présenté le long de la partie de bordure périphérique cousue, à l'exception du côté de rabattement entre le premier panneau et le deuxième panneau.

4. Dispositif à cousin de sécurité gonflable comprenant : un élément plissé coussin gonflable (10) selon la revendication 1, 2 ou 3 ;
un boîtier (20) où l'élément plissé du coussin gonflable est stocké ; et
un générateur (21) pour gonfler le coussin gonflable.

5. Dispositif à cousin de sécurité gonflable selon la revendication 4,
**caractérisé en ce que** le coussin gonflable est le coussin gonflable selon les revendications 1, 2 ou 3, et
**en ce que** l'élément plissé du coussin gonflable est formé par pliage ou enroulement de la section gonflable verticale plusieurs fois sur des lignes de pliage (w) s'étendant dans le sens de la largeur de la caisse de véhicule afin d'obtenir un élément plissé à partir de la section gonflable verticale, par mise en place de l'élément plissé de la section gonflable verticale au sommet de la partie de côté de la section gonflable latérale par rapport à la caisse de véhicule, et par rabattement de l'élément plissé de la section gonflable verticale sur la partie de côté de la section gonflable latérale par rapport à la caisse de véhicule de manière à recouvrir celle-ci dans une partie centrale de la section gonflable latérale par rapport à la caisse de véhicule.

6. Dispositif à cousin de sécurité gonflable selon la revendication 4, où la largeur (D1) de l'élément plissé de la section gonflable verticale dans la direction s'étendant entre l'avant et l'arrière par rapport à la caisse de véhicule représente 85 à 100 % de la largeur (D2) du boîtier dans la direction s'étendant entre l'avant et l'arrière par rapport à la caisse de véhicule.

7. Véhicule comprenant un dispositif à cousin de sécurité gonflable selon l'une quelconque des revendications 4 à 6.
